# FASCICULE DE BREVET EUROPEEN

(11) **EP 0 783 853 B1**
(45) Date de publication et mention de la délivrance du brevet: **23.07.1997**
(21) Numéro de dépôt: 96440008.9
(22) Date de dépôt: 23.01.1996
(51) Int. Cl.: A47B 17/00

(54) **Dispositif de liaison multidirectionnel**
Mehrdimensionale Verbindungsvorrichtung
Multi-directional linking device

(43) Date de publication de la demande: 16.07.1997
(73) Titulaire: Steelcase Strafor, F-67035 Strasbourg Cédex (FR)
(72) Inventeur: Oberle, Jean-Marc, F-67310 Cosswiller (FR)
(74) Mandataire: Littolff, Denis

(56) Documents cités:
- FR-A- 2 192 784

## Description

La présente invention concerne un dispositif de liaison multidirectionnel pour l'assemblage et la solidarisation de pièces de mobilier du type bureaux paysagers, composés notamment de plans de travail horizontaux, de piétements et de panneaux ou éléments verticaux que l'on peut agencer suivant de multiples combinaisons donnant des configurations de bureaux variées.

L'une des difficultés de la réalisation d'ensembles qualifiés de "paysagers" réside dans le grand nombre d'éléments à assembler, conduisant à de multiples solutions d'assemblage et de fixation pouvant compliquer la tâche des agents chargés du montage. En amont des opérations de montage proprement dites, la gestion des systèmes de fixation, dépendant étroitement de la configuration à réaliser, constitue également un problème important.

Dans un passé récent, la tendance a été de réduire le nombre des modules proposés dans lesdits ensembles paysagers, de manière à simplifier les commandes et leur traitement. Les problèmes rencontrés par les monteurs pour procéder à l'assemblage desdits modules, impliquant des liaisons dans plusieurs directions, n'en ont pas toujours été simplifiés pour autant. Il faut toujours gérer des liaisons horizontales dans plusieurs plans, différentes selon les modules à connecter, et des liaisons verticales qui dépendent également du type de module à installer, et dont les modes de fixations ne sont pas toujours bien différenciés, pouvant être à l'origine d'erreurs, ou à tout le moins compliquant la gestion du montage.

Ces problèmes sont notamment générés par les conceptions usuelles des modules des bureaux paysagers, configurés sous forme de blocs complets pouvant être isolés ou accolés, et comprenant au moins un plateau horizontal et des piétements, auxquels s'ajoutent éventuellement des éléments verticaux du type panneau de séparation. Dans les ensembles classiques, ces panneaux viennent au surplus se fixer directement dans la surface utile dudit plateau horizontal.

Ce type de conception traditionnelle multiplie les zones de fixation, aboutit parfois à des éléments structurellement redondants, empêche d'avoir une vision claire et simplifiée du montage, et ne permet enfin pas d'exploiter de la meilleure manière les espaces et surfaces disponibles.

Ainsi, le système divulgué dans le document de brevet français référencé FR-A-2 192 784 présente de nombreuses pièces permettant, selon les options utilisées, d'aboutir à plusieurs configurations de montage. Il est par exemple possible d'obtenir des piétements en C, en U et en I au moyen d'agencements particuliers et d'un choix spécifique parmi les nombreux éléments faisant partie du système.

Dans cet exemple, il y a typiquement un nombre d'éléments différents incompatible avec une gestion simplifiée des stocks et du montage, et l'organisation même de l'assemblage souffre d'un manque d'unité au moins pour certaines pièces de base. Chaque montage nécessite de la part du monteur une excellente connaissance des pièces à disposition, et une excellente gestion des stocks en amont. En outre, le monteur doit disposer d'outils spécifiques et ne pas se tromper dans l'ordre de montage.

La présente invention élimine ces inconvénients grâce à l'utilisation d'une pièce assurant plusieurs fonctions en relation avec les modules des ensembles paysagers avec lesquels elle coopère, dont principalement mais non exclusivement des fonctions de solidarisation desdits modules entre eux.

Le premier objectif de la pièce ou du dispositif de l'invention est par conséquent la solidarisation / fixation des modules les uns aux autres, dans plusieurs directions correspondant sensiblement aux plans dans lesquels se développent lesdits modules.

Un autre objectif de l'invention est de proposer un tel dispositif de liaison pouvant coopérer avec un piétement disposé soit sous le rebord d'un unique plateau horizontal, soit partagé entre deux plateaux contigus, ledit dispositif étant néanmoins positionné dans les deux cas de la même façon relativement au plateau horizontal.

Un autre objectif encore de l'invention est de permettre le positionnement et la fixation des éléments verticaux du type cloisons de séparation, de manière à éviter toute liaison directe entre la surface utile desdits plateaux et les éléments verticaux.

Le dispositif de l'invention permet secondairement également la fixation à un profilé reliant deux dispositifs de liaison conformes à l'invention, s'étendant dans une direction longitudinale par rapport au plateau formant le plan de travail, et formant stabilisateur pour l'ensemble.

Ce dispositif de liaison présente donc plusieurs avantages déterminants dans le cadre du montage d'éléments de mobilier paysager, en simplifiant leur assemblage, en améliorant la modularité, notamment en rendant possible le partage du piétement, et enfin en permettant l'installation d'éléments verticaux lourds sous contrainte mécanique. Ces derniers éléments sont par exemple des caissons de rangement surplombant le plan de travail, ou encore des étagères.

A cet effet, le dispositif de liaison multidirectionnel selon l'invention comporte une platine centrale dotée de faces verticales desquelles se développent d'une part des broches prévues pour coopérer avec d'autres éléments supports du plateau, et d'autre part au moins un bras se terminant par une platine surélevée destinée à supporter au moins un élément vertical, ledit dispositif étant situé au voisinage d'un angle d'un plan de travail.

L'une des broches prend la forme d'une poutrelle d'allure rectangulaire prévue pour coopérer avec un profilé s'ajustant dans ladite poutrelle. Il s'agit du profilé précité, agissant notamment comme stabilisateur. Selon une configuration préférentielle, ledit profilé peut être fixé sur ladite poutrelle à l'aide d'un moyen de fixation permettant de régler la position relative des deux éléments.

Ce moyen de fixation comporte par exemple au moins une vis boulonnable dans un orifice de la poutrelle après avoir traversé un orifice du profilé, l'un ou l'autre desdits orifices pouvant être allongé de manière à permettre le réglage de la position relative avant fixation.

L'une des broches se développant à partir de la platine centrale de l'élément de liaison multidirectionnel selon l'invention est double, chacune des deux branches pouvant coopérer avec un profilé identique, dans lequel elle s'insère.

Le profilé en question est par exemple situé en partie haute d'un piétement supportant un plateau horizontal, formant la semelle sur laquelle repose ledit plateau.

Les deux branches peuvent être de longueur différente, et munies d'orifices destinés à coopérer avec des moyens de fixation du plateau horizontal à fixer.

L'une des branches ou les deux réunies s'ajustent dans ledit profilé qui supporte un plateau horizontal muni d'au moins un téton de fixation coopérant simultanément avec ledit profilé et les orifices de la ou des branches.

Le troisième élément relié à la platine centrale, c'est-à-dire le bras terminé par une platine surélevée, est disposé de sorte que la surface supérieure de ladite platine soit sensiblement au niveau de la surface supérieure des plans de travail.

Ladite surface supérieure de la platine est munie de reliefs et plus particulièrement d'orifices permettant l'installation d'éléments verticaux du type panneaux verticaux ou colonnettes support de dispositifs de rangement.

Selon une possibilité, le bras aboutissant à la platine surélevée est double, et se déploie symétriquement de part et d'autre d'un plan médian vertical.

De préférence encore, chaque bras reliant la platine surélevée à la platine centrale est de forme recourbée.

Comme on l'a dit précédemment, les avantages procurés par cette pièce de liaison multidirectionnelle sont considérables, car elle concentre des fonctions auparavant disséminées sur les différents éléments à assembler, et elle simplifie les opérations de montage.

L'invention va à présent être décrite d'une manière plus détaillée, en référence aux figures annexées, pour lesquelles :
- La figure 1 est une vue en perspective d'un dispositif de liaison selon la présente invention ;
- La figure 2 est une vue en élévation de face du même dispositif ;
- La figure 3 est une vue en perspective d'une variante diagonale du dispositif d'angle représenté aux figures 1 et 2 ;
- La figure 4 est une vue en élévation du dispositif de la figure 3 ;
- La figure 5 montre une application des deux variantes des figures précédentes ;
- La figure 6 représente une vue de côté d'un montage complet utilisant un dispositif d'angle, en cours d'assemblage ;
- La figure 7 représente la même vue, le montage achevé ;
- La figure 8 en donne une vue en perspective, et
- La figure 9 montre cette même vue avec un plateau horizontal et sans cloison verticale.

Les différentes figures définies ci-dessus représentent une configuration préférentielle de l'invention, comprenant principalement une platine centrale 1 de laquelle partent des broches 2, 3 et un bras 4.

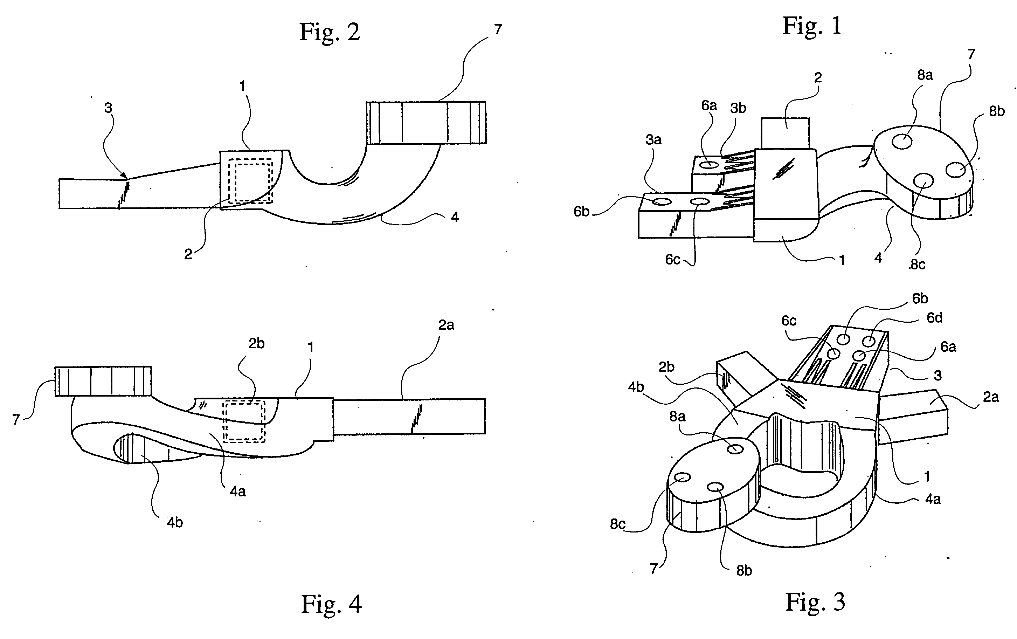

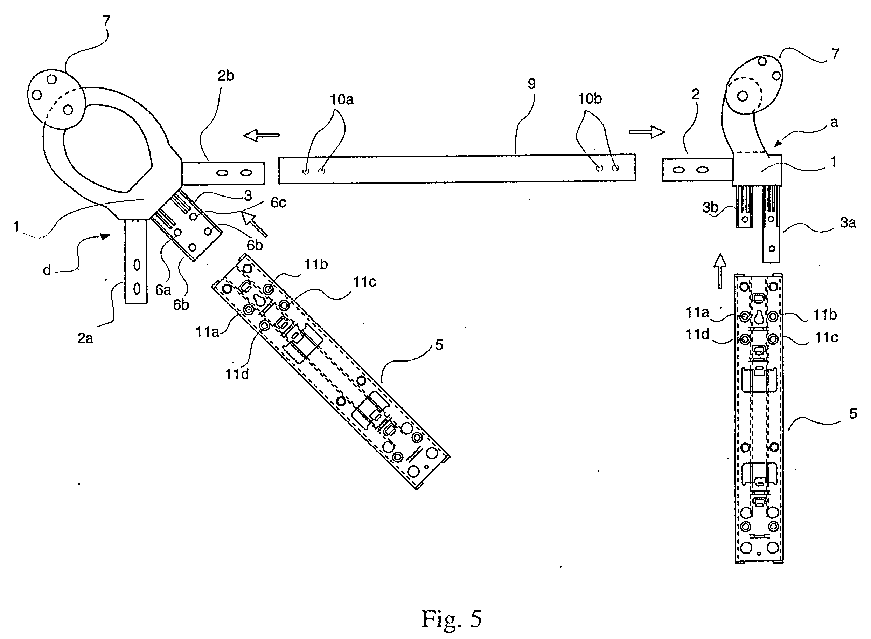

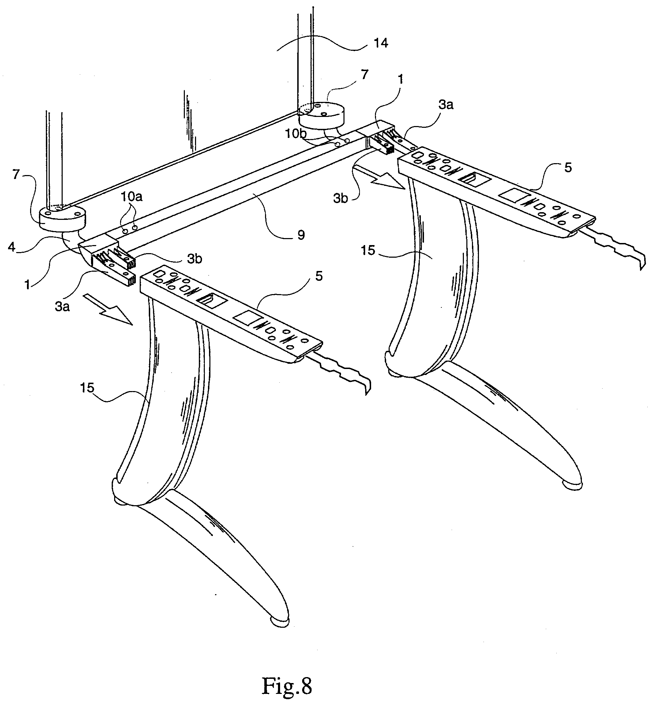

La platine centrale 1 est d'allure prismatique, ainsi que les broches 2 et 3. La version d'angle du dispositif, représenté en figures 1 et 2, comporte une double broche 3a et 3b destinée à coopérer avec la semelle supérieure 5 d'un piétement (figures 5, 8). Les orifices 6a, 6b, 6c pratiqués dans lesdites broches 3a et 3b sont prévus pour coopérer avec des tétons du plateau horizontal formant plan de travail, ainsi que cela sera décrit en détail ci-après. Il y a deux versions d'angle différentes, une version droite et une version gauche.

La platine 7, surélevée par rapport aux éléments déjà décrits, termine un bras 4 recourbé, permettant d'une part de décaler les éléments verticaux par rapport au plan de travail, et d'autre part de laisser le passage à des câbles électriques simplement posés. Ainsi, même lorsque le plateau horizontal entoure partiellement la platine 7, les câbles peuvent passer entre ledit plateau et le bras 4 car il subsiste un passage dû à la courbure. Cette platine 7 comporte également des orifices 8a, 8b, 8c destinés à recevoir lesdits éléments verticaux du type colonnette, panneaux etc (voir figure 8), solidarisés par exemple par emmanchement conique.

Les figures 3 et 4 montrent une variante à la version d'angle, destinée à équiper des zones support diagonales. Cette version diagonale comporte une broche 3 unique, mais un double bras 4a, 4b et une double broche 2a, 2b destinée à solidariser deux profilés perpendiculaires.

L'unicité de la broche 3 s'explique par le fait que dans une telle zone diagonale, ladite broche ne coopère qu'avec une semelle 5 surmontant un unique piétement. A l'inverse, comme on le verra dans la suite, la double broche 3a, 3b permet de coopérer avec une "demie" semelle 5, partagée longitudinalement avec un autre dispositif de liaison multidirectionnel selon la présente invention.

La figure 5 montre mieux l'articulation des divers éléments de l'ensemble : cette vue de dessus montre les parties supérieures des piétements, à savoir les semelles 5, donnant au surplus les directions desdits piétements. Un dispositif d'angle a selon l'invention et un dispositif diagonal d encadrent un profilé 9 doté d'orifices 10a, 10b coopérant avec des orifices oblongs des broches 2, 2b, de manière à pouvoir opérer un réglage de position lors de la fixation du profilé 9 auxdites broches 2, 2b. Cette fixation peut être réalisée à l'aide d'un simple boulonnage.

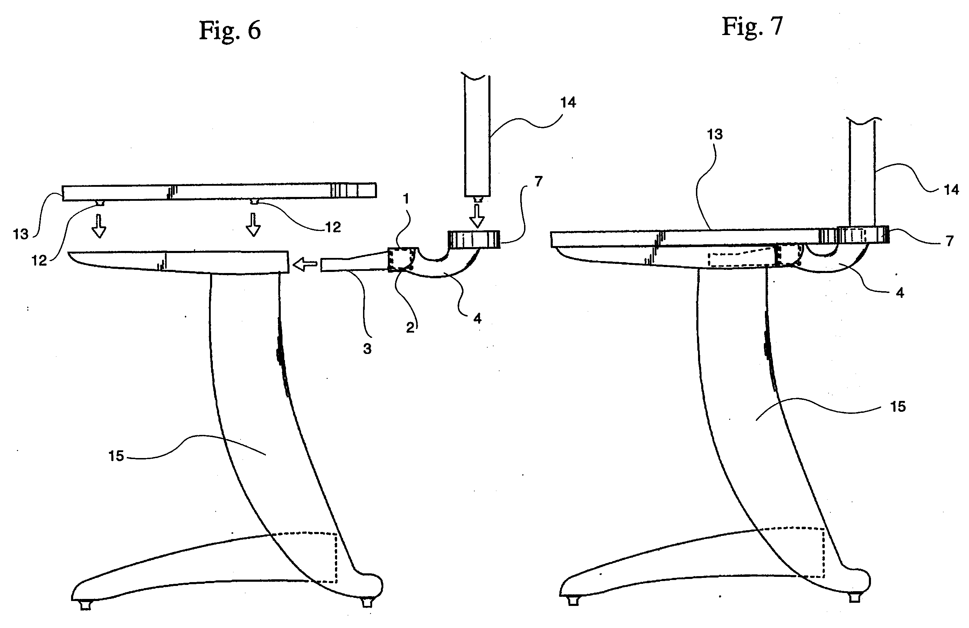

Les semelles 5 sont telles qu'en butée contre la face verticale correspondante de la platine 1 du dispositif de liaison de l'invention, leurs orifices d'extrémité 11a à 11d sont centrés avec les orifices 6a à 6c ou 6d dudit dispositif. Des tétons 12 (voir figure 6), placés sous les plateaux horizontaux 13, se logent dans les orifices ainsi créés, et peuvent être fixés au moyen d'un dispositif de verrouillage interne à la semelle, dispositif qui n'est pas l'objet de la présente invention.

Les figures 6 et 7 montrent l'assemblage des éléments supérieurs, à savoir le plateau 13 et une cloison verticale 14, le centrage / la fixation du plateau étant réalisé(e) via les tétons 12. Les flèches blanches, dans toutes les figures où elles apparaissent, signalent le sens du montage.

Lorsque l'ensemble est monté sur les piétements 15, le plateau 13 et les platines surélevées 7 des dispositifs de liaison de la présente invention sont sensiblement au même niveau. Les cloisons verticales 14 descendent par conséquent jusqu'au niveau de la surface supérieure desdits plateaux 13. Ces derniers reposent sur les platines centrales 1 des dispositifs de liaison de l'invention, sur les profilés 9 enfichés sur les broches 2, et sur les semelles 5 des piétements.

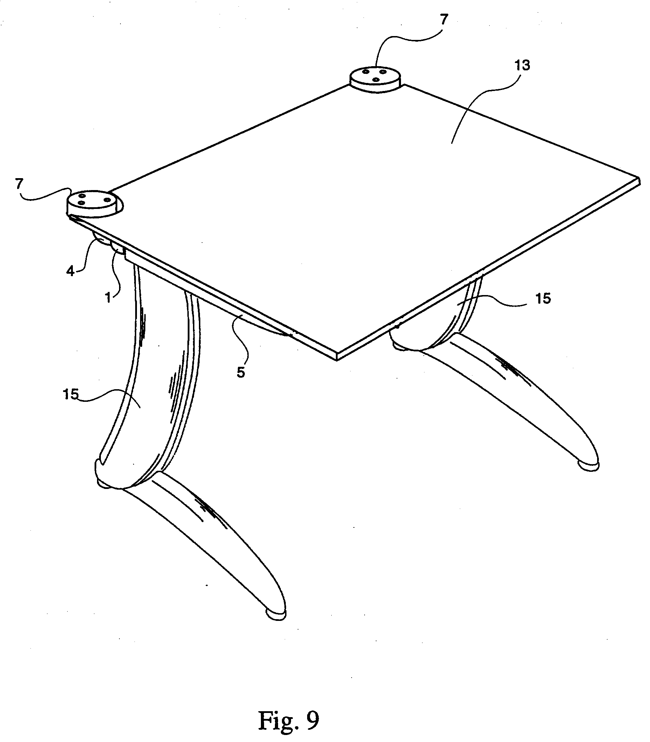

La figure 8 montre en perspective une phase d'installation précisant les positions respectives des éléments précités. Seul manque le plateau horizontal 13, non représenté pour faciliter la visualisation des éléments plus directement liés à l'objet de l'invention. Il est toutefois présent sur la figure 9, faisant également apparaître l'affleurement des platines 7, partiellement entourées par ledit plateau 13.

Il est à noter que les dispositifs d'angle comportent bien entendu deux configurations différentes, symétriques par rapport à un plan vertical perpendiculaire au profilé 9.

La figure 8 montre bien l'avantage considérable procuré par l'invention au titre de la solidarisation des divers éléments. En effet, chaque dispositif de l'invention comporte un certain nombre de liaisons possibles, faciles à comptabiliser au moment de la conception du bureau paysager et utilisant des moyens faciles à mettre en oeuvre, tels que l'enfichage dans des broches, la pose par gravitation, sous contrainte, etc.

L'ensemble de la description qui précède met également bien en évidence la modularité permise par le dispositif, permettant le partage des piétements entre deux plateaux, l'utilisation de panneaux verticaux dans plusieurs directions possibles, etc.

Toutefois, cette description n'a que pour objet de présenter un exemple préférentiel de dispositif de liaison multidirectionnel selon l'invention. En effet, elle ne peut être considérée comme limitative de l'invention, et comprend notamment les variantes comprises dans le domaine de protection généré par les revendications annexées.

## Revendications

1. Dispositif de liaison multidirectionnel pour l'assemblage et la solidarisation de pièces de mobilier du type bureaux paysagers modulables composés essentiellement de plans de travail horizontaux, de piétements et de panneaux ou éléments verticaux que l'on peut agencer suivant de multiples configurations, comportant une platine centrale (1) présentant au moins une surface plane horizontale située sous au moins un plan de travail (13), caractérisé en ce que ladite platine centrale (1) est dotée de faces verticales desquelles se développent d'une part des broches (2, 3) prévues pour coopérer avec d'autres éléments supports du plan de travail (13), et d'autre part au moins un bras (4) se terminant par une platine surélevée (7) destinée à supporter au moins un élément vertical (14), ledit dispositif étant situé au voisinage d'un angle d'un plan de travail (13).

2. Dispositif de liaison multidirectionnel selon la revendication 1, caractérisé en ce que l'une des broches (2) prend la forme d'une poutrelle d'allure prismatique prévue pour coopérer avec un profilé (9) s'ajustant dans ladite poutrelle (2).

3. Dispositif de liaison multidirectionnel selon la revendication 2, caractérisé en ce que ledit profilé (9) est fixable sur ladite poutrelle va un moyen de fixation permettant de régler la position relative des deux éléments.

4. Dispositif de liaison multidirectionnel selon la revendication 3, caractérisé en ce que ledit moyen de fixation comporte au moins une vis boulonnable dans un orifice de la poutrelle après avoir traversé un orifice (10a, 10b) du profilé, l'un ou l'autre desdits orifices pouvant être allongé de manière à permettre le réglage de la position relative avant fixation.

5. Dispositif de liaison multidirectionnel selon l'une quelconque des revendications précédentes, caractérisé en ce que l'une des broches (3) est double, chacune des deux branches (3a, 3b) pouvant coopérer avec un profilé (5) identique, dans lequel elle s'insère.

6. Dispositif de liaison multidirectionnel selon la revendication précédente, caractérisé en ce que les deux branches (3a, 3b) sont de longueur différente, et munies d'orifices (6a à 6c) destinés à coopérer avec des moyens de fixation du plateau horizontal (13) à fixer.

7. Dispositif de liaison multidirectionnel selon la revendication 6, caractérisé en ce qu'au moins l'une des branches (3) s'ajuste dans un profilé (5) supportant un plateau horizontal (13) muni d'au moins un téton de fixation (12) coopérant simultanément avec ledit profilé (5) et les orifices (6a à 6d).

8. Dispositif de liaison multidirectionnel selon l'une quelconque des revendications précédentes, caractérisé en ce que le bras (4) terminé par une platine surélevée (7) est disposé de sorte que la surface supérieure de ladite platine (7) soit sensiblement au niveau de la surface supérieure des plateaux horizontaux (13).

9. Dispositif de liaison multidirectionnel selon la revendication précédente, caractérisé en ce que ladite surface supérieure de la platine (7) est munie de reliefs et plus particulièrement d'orifices (8a à 8c) permettant l'installation d'éléments verticaux du type panneaux verticaux (14) ou colonnettes support de dispositifs de rangement.

10. Dispositif de liaison multidirectionnel selon l'une des revendications 8 et 9, caractérisé en ce que ledit bras (4) aboutissant à la platine surélevée est double (4a, 4b), et se déploie symétriquement de part et d'autre d'un plan médian vertical.

11. Dispositif de liaison multidirectionnel selon l'une des revendications 8 à 10, caractérisé en ce que chaque bras (4, 4a, 4b) reliant la platine surélevée (7) à la platine centrale (1) est de forme recourbée, ménageant un passage entre le plateau horizontal (13) et ledit bras (4, 4a, 4b).

## Claims

1. Multidirectional connecting device for assembling and interlocking pieces of furniture of the type used in modulable open-plan offices, consisting substantially of horizontal working surfaces, supports and panels or vertical components which can be fitted together according to multiple configurations, comprising a central plate (1) having at least one horizontal surface situated under at least one working surface (13), characterized in that the said central plate (1) is provided with vertical faces, from which extend on the one hand pegs (2, 3) provided for cooperating with other supporting components of the working surface (13), and on the other hand at least one arm (4) ending in a raised plate (7) designed to support at least one vertical component (14), the said device being situated in the vicinity of an angle of a working surface (13).

2. Multidirectional connecting device according to claim 1, characterized in that one of the pegs (2) takes the form of a beam with a prismatic appearance for cooperating with a shaped section (9) fitting together with the said beam (2).

3. Multidirectional connecting device according to claim 2, characterized in that the said shaped section (9) can be attached to the said beam via a means of attachment enabling the relative position of the two components to be adjusted.

4. Multidirectional connecting device according to claim 3, characterized in that the said means of attachment comprises at least one screw which can be screwed into an orifice in the beam after having passed through an orifice (10a, 10b) in the shaped section, it being possible to elongate one or other of the said orifices to enable the relative positions to be adjusted before attachment.

5. Multidirectional connecting device according to any one of the preceding claims, characterized in that one of the pegs (3) is a double one, each of the two branches (3a, 3b) being able to cooperate with an identical shaped section (5), into which it is inserted.

6. Multidirectional connecting device according to the preceding claim, characterized in that the two branches (3a, 3b) differ in length and are provided with orifices (6a to 6c) designed to cooperate with the means of attachment for the horizontal board (13) which is to be attached.

7. Multidirectional connecting device according to claim 6, characterized in that at least one of the branches (3) is fitted into a shaped section (5) supporting a horizontal board (13) provided with at least one fixing stud (12) cooperating simultaneously with the said shaped section (5) and the orifices (6a to 6d).

8. Multidirectional connecting device according to any one of the preceding claims, characterized in that the arm (4) ending in a raised plate (7) is arranged so that the upper surface of the said plate (7) is substantially at the level of the upper surface of the horizontal boards (13).

9. Multidirectional connecting device according to the preceding claim, characterized in that the said upper surface of the plate (7) is provided with raised areas and more particularly orifices (8a to 8c) enabling vertical components of the vertical panel type (14) to be installed or small columns supporting storage devices.

10. Multidirectional connecting device according to claim 8 or claim 9, characterized in that the said arm (4) ending in the raised plate is a double one (4a, 4b) and is deployed symmetrically either side of a middle vertical plane.

11. Multidirectional connecting device according to one of claims 8 to 10, characterized in that each arm (4, 4a, 4b) connecting the raised plate (7) to the central plate (1) has a curved shape, providing a passage between the horizontal board (13) and the said arm (4, 4a, 4b).

## Patentansprüche

1. Multidirektionale Verbindungsvorrichtung für den Zusammenbau und die Befestigung von Teilen von Möbeln von der Bauart modulfähiger Bürolandschaften, die im wesentlichen aus horizontalen Arbeitsebenen, Fußgestellen und vertikalen Platten oder Elementen gebildet sind, die in vielen Konfigurationen angeordnet werden können, mit einer zentralen Grundplatte (1), die wenigstens eine horizontale, ebene Oberfläche aufweist, die sich unter wenigstens einer Arbeitsebene (13) befindet, dadurch gekennzeichnet, daß die zentrale Grundplatte (1) mit vertikalen Flächen versehen ist, wovon sich einerseits Zapfen (2, 3), die dazu vorgesehen sind, mit anderen Unterstützungselementen der Arbeitsplatte (13) zusammenzuwirken, und andererseits wenigstens ein Arm (4) erstrecken, der in einer höherliegenden Grundplatte (7) endet, die dazu bestimmt ist, wenigstens ein vertikales Element (14) zu unterstützen, wobei sich die Vorrichtung in der Nähe einer Ecke einer Arbeitsebene (13) befindet.

2. Multidirektionale Verbindungsvorrichtung nach Anspruch 1, dadurch gekennzeichnet, daß einer der Zapfen (2) die Form eines Trägers mit prismatischem Verlauf besitzt, der dazu vorgesehen ist, mit einem an den Träger (2) angepaßten Formstahl (9) zusammenzuwirken.

3. Multidirektionale Verbindungsvorrichtung nach Anspruch 2, dadurch gekennzeichnet, daß der Formstahl (9) am Träger mittels eines Befestigungsmittels befestigt werden kann, das die Einstellung der relativen Position der zwei Elemente ermöglicht.

4. Multidirektionale Verbindungsvorrichtung nach Anspruch 3, dadurch gekennzeichnet, daß das Befestigungsmittel wenigstens eine Schraube enthält, die in eine Öffnung des Trägers geschraubt werden kann, nachdem sie durch eine Öffnung (10a, 10b) des Formstahls geführt worden ist, wobei die eine oder die andere der Öffnungen eine längliche Form besitzt, um die Einstellung der relativen Position vor der Befestigung zu ermöglichen.

5. Multidirektionale Verbindungsvorrichtung nach irgendeinem der vorangehenden Ansprüche, dadurch gekennzeichnet, daß einer der Zapfen (3) geteilt ist, wobei jeder der beiden Schenkel (3a, 3b) mit einem völlig gleichen Formstahl (5) zusammenwirken kann, in den er eingeschoben wird.

6. Multidirektionale Verbindungsvorrichtung nach dem vorangehenden Anspruch, dadurch gekennzeichnet, daß die zwei Schenkel (3a, 3b) unterschiedliche Länge besitzen und mit Öffnungen (6a bis 6c) versehen sind, die dazu bestimmt sind, mit Befestigungsmitteln der zu befestigenden horizontalen Platte (13) zusammenzuwirken.

7. Multidirektionale Verbindungsvorrichtung nach Anspruch 6, dadurch gekennzeichnet, daß wenigstens einer der Schenkel (3) an einen Formstahl (5) angepaßt ist, der eine horizontale Platte (13) trägt, die mit wenigstens einem Befestigungszapfen (12) versehen ist, der zugleich mit dem Formstahl (5) und den Öffnungen (6a bis 6d) zusammenwirkt.

8. Multidirektionale Verbindungsvorrichtung nach irgendeinem der vorangehenden Ansprüche, dadurch gekennzeichnet, daß der Arm (4), der in einer höherliegenden Grundplatte (7) endet, so angeordnet ist, daß die obere Fläche der Grundplatte (7) im wesentlichen in der Ebene der oberen Fläche der horizontalen Arbeitsplatten (13) liegt.

9. Multidirektionale Verbindungsvorrichtung nach dem vorangehenden Anspruch, dadurch gekennzeichnet, daß die obere Fläche der Grundplatte (7) mit Reliefs, insbesondere mit Öffnungen (8a bis 8c), versehen ist, die die Installation von vertikalen Elementen von der Bauart vertikaler Platten (14) oder Tragsäulen für Schrankvorrichtungen ermöglichen.

10. Multidirektionale Verbindungsvorrichtung nach einem der Ansprüche 8 und 9, dadurch gekennzeichnet, daß der Arm (4), der zur höherliegenden Grundplatte führt, geteilt ist (4a, 4b) und sich beiderseits einer vertikalen Mittelebene symmetrisch erstreckt.

11. Multidirektionale Verbindungsvorrichtung nach einem der Ansprüche 8 bis 10, dadurch gekennzeichnet, daß jeder Arm (4, 4a, 4b), der die höherliegende Grundplatte (7) mit der zentralen Grundplatte (1) verbindet, eine durchgebogene Form besitzt, die zwischen der horizontalen Platte (13) und dem Arm (4, 4a, 4b) einen Durchlaß ergibt.
